# EUROPEAN PATENT APPLICATION

(11) **EP 3 196 859 A2**
(43) Date of publication of application: **26.07.2017**
(21) Application number: 17150578.7
(22) Date of filing: 06.01.2017
(51) Int. Cl.: G08G 1/01, G01C 21/36, B60W 50/14

(54) **TRAFFIC VISUALIZATION SYSTEM**

(30) Priority: 19.01.2016 US 201615000741
(71) Applicant: Honeywell International Inc., Morris Plains, NJ 07950 (US)
(72) Inventor: NARAYANA, Bharath Kallali, Morris Plains, New Jersey 07950 (US); KHOT, Bharat Balaso, Morris Plains, New Jersey 07950 (US); KALKERE, Giridhara, Morris Plains, New Jersey 07950 (US); RAMASAMY, Vivek, Morris Plains, New Jersey 07950 (US)
(74) Representative: Houghton, Mark Phillip

(57) **Abstract**

Systems and methods provide traffic information, including traffic flow, in regions that lack the infrastructure necessary for providing well-established traffic control and/or monitoring systems. Improved information pertaining to traffic congestion, traffic incidents, weather and overall traffic speed and flow may be provided using information from mobile cameras that are mounted onto vehicles and are configured to provide information back to a server that can then share the information with other users.

## Description

### Technical Field

The disclosure relates generally to traffic visualization systems and more particularly to traffic visualization systems that rely at least in part upon images provided by other vehicles.

### Background

Traffic congestion in many cities continues to grow worse as population densities, and thus vehicle densities, continue to grow. Some regions have well-established traffic control and monitoring systems that may, for example, include a large number of stationary traffic cameras mounted at fixed locations along key roadways and/or vehicle detection pads that are buried within key roadways. Some regions, however, do not currently have the infrastructure necessary to monitor traffic flow and to provide drivers with information pertaining to preferred routes that will minimize traffic delays, for example. There is a desire to be able to provide traffic information, including traffic flow, in regions that lack the infrastructure necessary for providing well-established traffic control and/or monitoring systems.

### Summary

The disclosure relates generally systems for providing traffic information, including traffic flow, in regions that lack the infrastructure necessary for providing well-established traffic control and/or monitoring systems. In particular, the disclosure relates generally to a traffic visualization system that provides improved information pertaining to traffic congestion, traffic incidents, weather and overall traffic speed and flow.

In a particular example, a traffic visualization system may include a display device, a memory that stores a route between a current position of the traffic visualization system and a route destination and a network interface. A controller may be operatively coupled to the display device, the memory and the network interface. In some instances, the controller is configured to receive images via the network interface. In some cases, the images include still images or a video feed captured at a vehicle remote from the traffic visualization system that is traveling along the route. The received images may be displayed on the display device. In some cases, the controller is further configured to display a map including one or more roadways and the current position of the traffic visualization system in relation to the displayed one or more roadways. In some cases, the controller may be configured to also display the route destination in relation to the displayed one or more roadways as well as the route along the one or more roadways between the current position of the traffic visualization system and the route destination. In some cases, such a traffic visualization system may be part of a building control system, and in some cases, the display of the traffic visualization system may be mounted to an internal wall of a building. In some cases, the traffic visualization system may be implemented using a thermostat, a control panel, a smart phone, a tablet, a personal computer, and/or any other suitable device, as desired.

The preceding summary is provided to facilitate an understanding of some of the features of the present disclosure and is not intended to be a full description. A full appreciation of the disclosure can be gained by taking the entire specification, claims, drawings, and abstract as a whole.

### Brief Description of the Drawings

The disclosure may be more completely understood in consideration of the following description of various illustrative embodiments of the disclosure in connection with the accompanying drawings, in which:
Figure 1 is a schematic diagram of an illustrative traffic monitoring and reporting system in which a number of distinct traffic visualization systems share traffic information data with a server;
Figure 2 is a schematic diagram of an illustrative traffic monitoring and reporting system in which a number of mobile cameras provide traffic information to a server, which then communicates with a particular traffic visualization system;
Figure 3 is a schematic diagram of an illustrative traffic visualization system useful in the traffic monitoring and reporting systems of Figures 1 and 2;
Figure 4 is a schematic diagram of an illustrative traffic visualization system useful in the traffic monitoring and reporting systems of Figures 1 and 2;
Figures 5 through 8 provide illustrative but non-limiting examples of images that may be displayed by a traffic visualization system; and
Figure 9 is a flow diagram of an illustrative method that may be carried out.

While the disclosure is amenable to various modifications and alternative forms, specifics thereof have been shown by way of example in the drawings and will be described in detail. It should be understood, however, that the intention is not to limit the disclosure to the particular illustrative embodiments described herein. On the contrary, the intention is to cover all modifications, equivalents, and alternatives falling within the spirit and scope of the disclosure.

### Description

The following description should be read with reference to the drawings wherein like reference numerals indicate like elements. The drawings, which are not necessarily to scale, are not intended to limit the scope of the disclosure. In some of the figures, elements not believed necessary to an understanding of relationships among illustrated components may have been omitted for clarity.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

Devices or programs that are in communication with one another need not be in continuous communication with each other unless expressly specified otherwise. In addition, devices or programs that are in communication with one another may communicate directly or indirectly through one or more intermediaries.

As used herein, the terms "comprises," "comprising," "includes," "including," "has," "having" or any other variation thereof, are intended to cover a non-exclusive inclusion. For example, a process, method, article, system, or apparatus that comprises a list of features is not necessarily limited only to those features but may include other features not expressly listed or inherent to such process, method, article, system, or apparatus.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

The present disclosure is directed generally at systems for providing traffic information, including traffic flow, in regions that lack the infrastructure necessary for providing well-established traffic control and/or monitoring systems. In particular, the disclosure relates generally to a traffic visualization system that provides improved information pertaining to traffic congestion, traffic incidents, weather and overall traffic speed and flow. In some instances, for example, mobile cameras that are mounted to vehicles may be configured to provide images such as still images or video images captured by the mobile camera to a central server for sharing with other individuals who are similarly connected to the central server or otherwise able to receive these images. In some cases, the traffic images may be analyzed to provide an estimate of vehicle speed and/or vehicle density. In some instances, the traffic images may be analyzed to provide information pertaining to current weather in particular regions or areas.

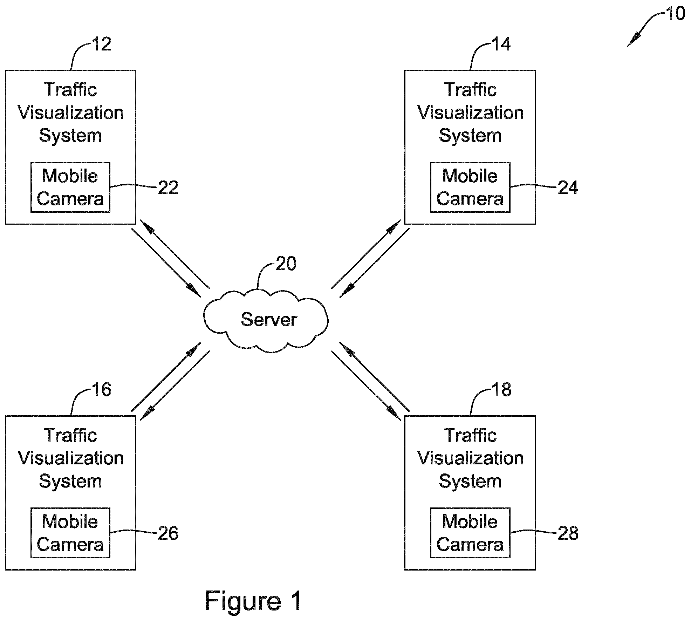

Figure 1 is a schematic diagram of an illustrative traffic monitoring and reporting system 10 in which a number of traffic visualization systems 12, 14, 16 and 18, as illustrated, are in communication with a server 20. It will be appreciated that while four traffic visualization systems 12, 14, 16 and 18 are shown in Figure 1, the traffic monitoring and reporting system 10 may include any number of traffic visualization systems and may in fact include a substantial number of traffic visualization systems. In some cases, one or more of the traffic visualization systems 12, 14, 16, 18 may be part of a building control system, and in some cases, a display device of a traffic visualization system may be mounted to an internal wall of a building for ready access by a user of the building. In some cases, at least part of one or more of the traffic visualization systems 12, 14, 16, 18 may be implemented using a thermostat, a control panel, a smart phone, a tablet, a personal computer, and/or any other suitable device, as desired. In some instances, at least some of the traffic visualization systems 12, 14, 16, 18 may be disposed in or on one or more vehicles. In some cases, at least some of the traffic visualization systems 12, 14, 16, 18 may be temporarily held or mounted within one or more vehicles. In some instances, at least some of the traffic visualization systems 12, 14, 16, 18 may be permanently mounted to one or more vehicles. For example, a traffic visualization system may use a display device such as a navigation system screen or a stereo screen that is mounted within the dashboard of the vehicle. In some cases, individuals may subscribe to a subscription-based service in which they pay a monthly fee to participate in the traffic monitoring and reporting system 10. In some cases, the traffic monitoring and reporting system 10 may instead be corporately sponsored. In some instances, the traffic monitoring and reporting system 10 may be sponsored by a local governmental body.

In some cases, at least some of the traffic visualization systems 12, 14, 16, 18 may include a camera, so that corresponding vehicles can contribute traffic information back to the server 20 and thus back to the traffic visualization systems 12, 14, 16, 18. For example, the traffic visualization system 12 may include a camera 22, the traffic visualization system 14 may include a camera 24, the traffic visualization system 16 may include a camera 26, and the traffic visualization system 18 may include a camera 28. In some cases, at least some of the cameras 22, 24, 26, 28 may be still cameras that are configured to take still pictures on a particular time interval. In some cases, at least some of the cameras 22, 24, 26, 28 are video cameras that are configured to provide video feeds and/or still images that represent a captured frame from a video feed. The cameras 22, 24, 26, 28 may be temporarily or permanently mounted in the vehicles. For example, at least some of the cameras 22, 24, 26, 28 may be mounted to a vehicle side mirror or the front side of a centrally located rear view mirror. In some cases, at least some of the cameras 22, 24, 26, 28 may be mounted in a front grille of a vehicle, for example. In some cases, at least some of the cameras 22, 24, 26, 28 may be mounted in a rear of a vehicle, and in some cases, may use the back-up camera found in many of today's vehicles. In some cases, one or more of the traffic visualization systems 12, 14, 16, 18 may not include a camera, such as when a traffic visualization system is mounted in a building and is part of a building control system.

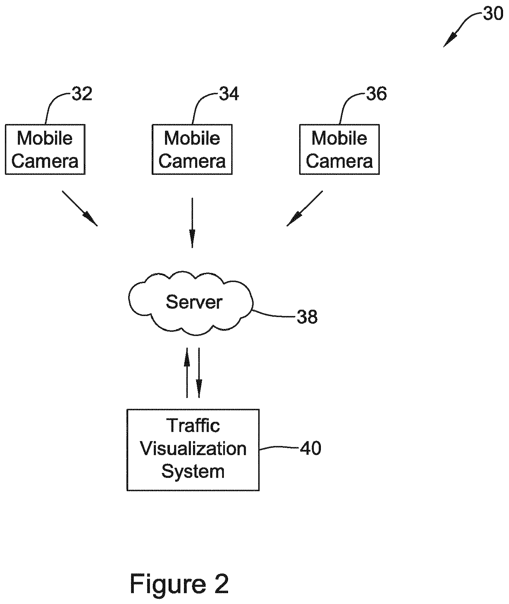

Figure 2 provides a schematic diagram of an illustrative traffic monitoring and reporting system 30 in which several mobile cameras 32, 34 and 36 communicate with a server 38. In some cases, the server 38 may be in communication with the server 20 (Figure 1). In some instances, the server 38 may be considered as representing the server 20. It will be appreciated that while three mobile cameras 32, 34, 36 are illustrated, the traffic monitoring and reporting system 30 may include any number of mobile cameras and may in some cases include a large number of mobile cameras. In some cases, at least some of the mobile cameras 32, 34, 36 may be part of distinct traffic visualization systems such as the traffic visualization systems 12, 14, 16, 18 (Figure 1). In some cases, at least some of the mobile cameras 32, 34, 36 may be standalone cameras that may be temporarily or permanently mounted to vehicles and thus may contribute traffic information to the server 38 but may not receive traffic information from the server 38 (e.g. from other users).

A traffic visualization system 40 may receive traffic information, via the server 38, from one or more of the mobile cameras 32, 34, 36 and/or from one or more other traffic visualization systems such as but not limited to the traffic visualization systems 12, 14, 16, 18 of Figure 1. In some cases, the traffic visualization system 40 may be permanently mounted to a vehicle. For example, at least part of the traffic visualization system 40 may be incorporated into a display device such as a navigation system screen or a stereo screen that is mounted within the dashboard of the vehicle. In some cases, the traffic visualization system 40 may be temporarily placed in the vehicle, such as being attached to the windshield or dashboard via suction cups, for example. In some cases, traffic visualization system 40 may be part of a building control system, and in some cases, a display device of the traffic visualization system 40 may be mounted to an internal wall of a building. In some cases, the traffic visualization system 40 may be implemented using a thermostat, a control panel, a smart phone, a tablet, a personal computer, and/or any other suitable device, as desired.

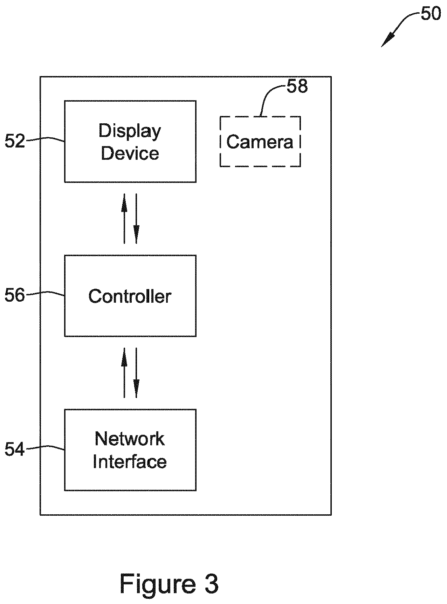

Figure 3 provides a schematic view of a traffic visualization system 50. In some cases, the traffic visualization system 50 may be considered as being an example of any of the traffic visualization systems 12, 14, 16, 18 (Figure 1) and/or the traffic visualization system 40 (Figure 2). The traffic visualization system 50 includes a display device 52. In some cases, the display device 52 may be an LCD or other type of display, and in some cases a touchscreen. A network interface 54 permits the traffic visualization system 50 to receive images from a remote source such as but not limited to the server 20 (Figure 1) or the server 38 (Figure 2). A controller 56 may be operably coupled to the display device 52 and to the network interface 54. In some cases, the controller 56 may be configured to receive an image via the network interface 54 and to display the image on the display device 52. In some instances, the image includes an image captured at a vehicle that is remote from the traffic visualization system 50 and that is traveling on a predefined route. In some cases, the received image includes an image captured by a still camera. In some instances, the received image includes a captured frame from a video feed, and in some cases may be the video feed itself. In some cases, the traffic visualization system 50 may include a camera 58 such as a still camera or a video camera such that the traffic visualization system 50 can provide traffic information to others.

In some instances, the controller 56 may be configured to display additional elements on the display device 52. For example, the controller 56 may be configured to display a map that includes one or more roadways and to indicate a current position of the traffic visualization system 50. When the traffic visualization system 50 is installed within a building, the current position may be a fixed position. When the traffic visualization system 50 is installed in a vehicle, the current position may be the current position of the vehicle. In some instances, the controller 56 may also be configured to display a route destination of the predefined route in relation to the displayed one or more roadways of the map and/or display the predefined route along the one or more roadways between the current position of the traffic visualization system 50 and the route destination. In some cases, the controller 56 is configured to display different images captured at different vehicles along the predefined route on the display device 52. In some instances, the controller 56 may be configured to receive a plurality of images via the network interface 54, where each of the plurality of images is captured by a different vehicle located at a different location along the predefined route, and to display one, two, or more of the plurality of received images on the display device 52.

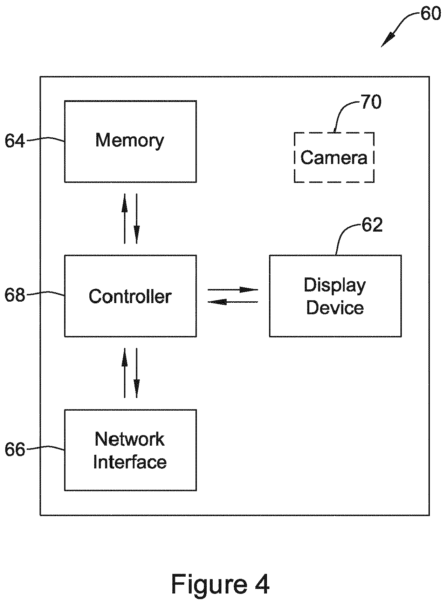

Figure 4 provides a schematic view of a traffic visualization system 60. In some cases, the traffic visualization system 60 may be considered as being an example of any of the traffic visualization systems 12, 14, 16, 18 (Figure 1) and/or the traffic visualization system 40 (Figure 2). The traffic visualization system 60 may include a display device 62, such as an LCD or LED display panel or touchscreen. A memory 64 may be configured to store a route between a current position of the traffic visualization system 60 and a route destination. The traffic visualization system 60 may include a network interface 66. A controller 68 may be operably coupled to the display device 62, the memory 64 and to the network interface 66. In some cases, the controller 68 may be configured to receive a video feed via the network interface 66 and to display on the display device 62 the received video feed. In some cases, the video feed may include a video feed captured at a vehicle that is remote from the traffic visualization system 60 and that is traveling along the route. In some instances, the video feed may include a video feed that is received from a subscriber to a route planning service. In some cases, the controller 68 may display different video feeds on the display device 62 captured by different vehicles along the route. In some cases, the traffic visualization system 60 may include a camera 70 such as a still camera or a video camera such that the traffic visualization system 60 can provide traffic information to others.

In some cases, the controller 68 may be configured to display additional elements on the display device 62. For example, the controller 68 may be configured to display a map that includes one or more roadways and to indicate a current position of the traffic visualization system 60. When the traffic visualization system 60 is installed within a building, the current position may be a fixed position. When the traffic visualization system 60 is installed in a vehicle, the current position may be the current position of the vehicle. In some instances, the controller 68 may be configured to display a route destination of the route in relation to the displayed one or more roadways of the map and/or display the predefined route along the one or more roadways between the current position of the traffic visualization system 60 and the route destination.

In some cases, the controller 68 may be configured to display different video feeds on the display device 62 captured at different vehicles along the predefined route. In some instances, the controller 68 may be configured to receive a plurality of video feeds via the network interface 66, where each of the plurality of video feeds is captured by a different vehicle located at a different location along the route, and to display one, two, or more of the plurality of received video feeds on the display device 62. In some cases, two or more received video feeds are displayed simultaneously, such as side by side on the display device 62. In some instances, two or more received video feeds are displayed sequentially, one at a time, on the display device 62.

In some cases, the controller 68 may be configured to receive weather information via the network interface 66 regarding the weather along the route. In some cases, the weather information may be provided by a subscription weather forecasting service. In some instances, the weather information may be provided by a local television station or a local radio station. In some cases, the weather information may be based at least in part on still images and/or video feeds received from one or more vehicles located along the route.

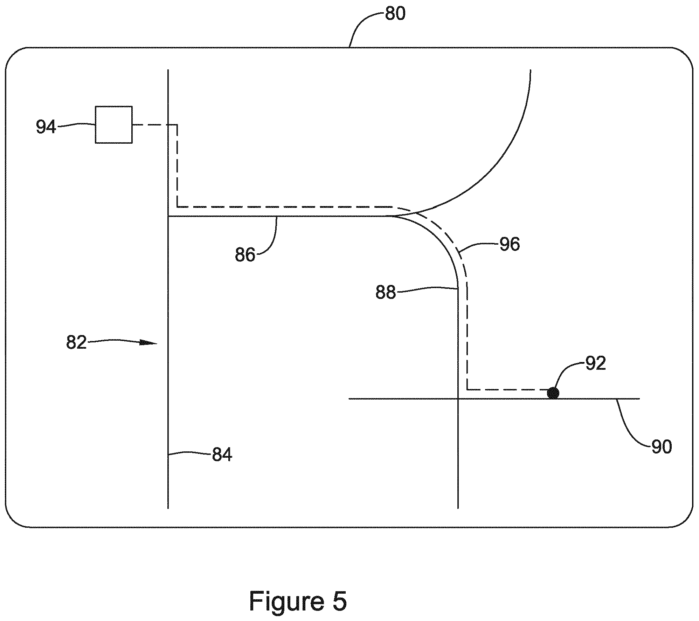

Figures 5 through 8 provide illustrative but non-limiting examples of displays that may be displayed by the traffic visualization systems 12, 14, 16, 18 (Figure 1) and/or the traffic visualization system 40 (Figure 2) and/or the traffic visualization system 50 (Figure 3) and/or the traffic visualization system 60 (Figure 4). Figure 5 shows a display device 80 that displays a map 82 that includes several roadways 84, 86, 88 and 90 (as illustrated). In the example shown in Figure 5, the traffic visualization system is carried in a vehicle, and the current position of the traffic visualization system is indicated by an icon 92. The route destination is indicated by an icon 94. It will be appreciated that the icons 92 and 94 may be a simple as dots or x's, or could be more elaborate. For example, the icon 92 indicating the current location could be an image of a car. The icon 94 indicating the destination could be an image of a house, for example. In some cases, the intended route between the current location and the destination may be indicated, for example, by a dotted line 96. In some cases, the intended route may be indicated on the display device 80 via the use of different colors, for example.

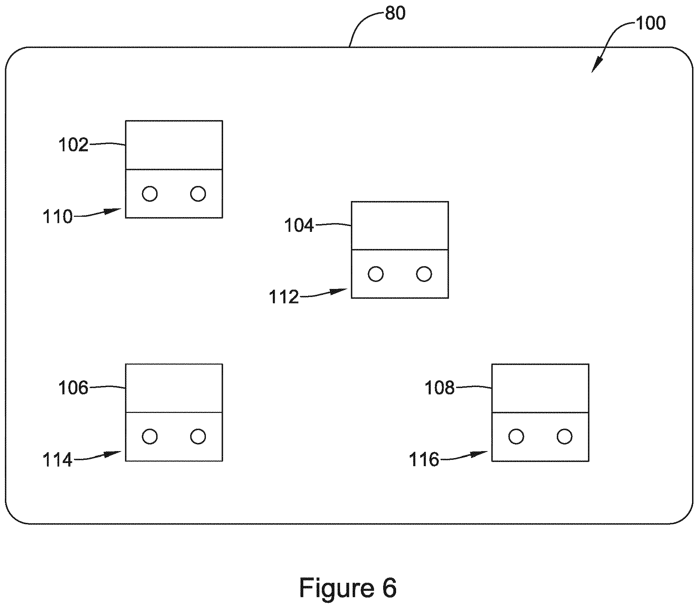

Figure 6 shows the display device 80 with another image 100. The image 100 may be a video feed, and thus the image 100 may change in real time as the vehicles shown move down the road. In some cases, the image 100 may be a still image, such as from a still camera or a captured frame from a video camera. As illustrated, the image 100 includes a vehicle 102, a vehicle 104, a vehicle 106 and a vehicle 108. It will be appreciated that the illustration of four vehicles 102, 104, 106, 108 is merely illustrative, as the image 100 may include all of the vehicles in the field of view of the camera. The vehicles 102, 104, 106, 108 are shown schematically, but include pairs of brake lights 110, 112, 114 and 116, respectively. In the image 100, the pairs of brake lights 110, 112, 114, 116 are not illuminated. By analyzing the status of the brake lights 110, 112, 114, 116 and the relative spacing between the vehicles 102, 104, 106, 108, a traffic visualization system may be able to ascertain a current congestion of the roadway at this location. The traffic visualization system may also be able to determine a current speed or a current average speed of the vehicles 102, 104, 106, 108 at that location. In some cases, the traffic visualization system may be able to see the road surface including the dashed lane markers passing by the vehicles, or perhaps analyze the distance a particular vehicle has moved from one frame to the next, to determine vehicle speeds and overall congestion. If the traffic visualization system includes GPS or other location services, vehicle speed may be determined directly from that data. In some cases, the system may be able to see if the road way is wet, which would indicate rain, or white, which would indicate snow.

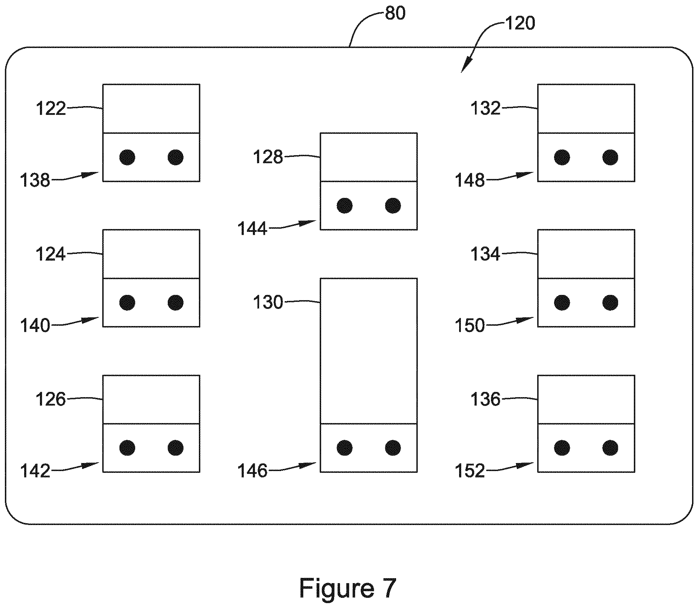

Figure 7 shows the display device 80 with another image 120. The image 120 may be a video feed, and thus the image 120 may change in real time as the vehicles shown move down the road. In some cases, the image 120 may be a still image, such as from a still camera or a captured frame from a video camera. As illustrated, the image 120 includes a vehicle 122, a vehicle 124, a vehicle 126, a vehicle 128, a vehicle 130, a vehicle 132, a vehicle 134, and a vehicle 136. It will be appreciated that the illustration of eight vehicles 122, 124, 126, 128, 130, 132, 134, 136 is merely illustrative, as the image 120 may include all of the vehicles in the field of view of the camera. The vehicles 122, 124, 126, 128, 130, 132, 134, 136 are shown schematically, but include pairs of brake lights 138, 140, 142, 144, 146, 148, 150 and 152, respectively. In the image 120, the pairs of brake lights 138, 140, 142, 144, 146, 148, 150 and 152 are illuminated. By analyzing the status of the brake lights 138, 140, 142, 144, 146, 148, 150 and 152, and the relative spacing between the vehicles 122, 124, 126, 128, 130, 132, 134, 136, a traffic visualization system may be able to ascertain a current congestion of the roadway at this location. The traffic visualization system may also be able to determine a current speed or a current average speed of the vehicles 122, 124, 126, 128, 130, 132, 134, 136 at that location. In some cases, the traffic visualization system may be able to see the road surface including the dashed lane markers passing by the vehicles, or perhaps analyze the distance a particular vehicle has moved from one frame to the next, to determine vehicle speeds and overall congestion. If the traffic visualization system includes GPS or other location services, vehicle speed may be determined directly from that data. In some cases, the system may be able to see if the road way is wet, which would indicate rain, or white, which would indicate snow.

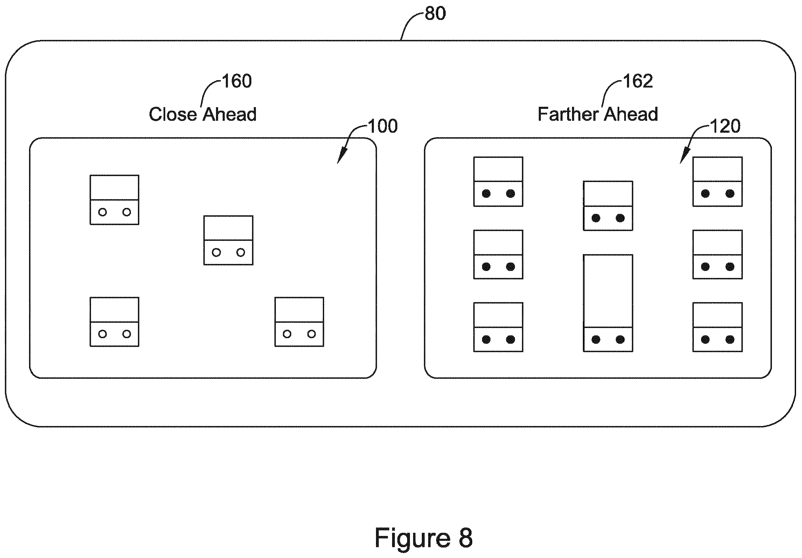

In some cases, the display device 80 may provide several images. Figure 8 is an example of the display device 80 showing, in split screen fashion, the image 100 (Figure 6) next to the image 120 (Figure 7). In some cases, this provides a driver with information regarding what may be coming up shortly, such as in the next few minutes, as well as what may be coming up later, such as perhaps ten minutes down the road along the route. As illustrated, the image 100 includes a header 160 reading CLOSE AHEAD while the image 120 includes a header 162 reading FARTHER AHEAD. In some cases, the headers 160, 162 may include timing information indicating how far away each image 100, 120 is from the current location of the vehicle. In some cases, the user may be able to select which images he or she wishes to view, i.e., one minute ahead, ten minutes ahead, twenty minutes ahead, and so on. In some cases, the user may be able to select particular geographic locations along the route for display, such as locations known to have regular congestion. In some cases, these various images maybe displayed simultaneously or sequentially, depending in part upon the size of the display device 80 and perhaps user preferences.

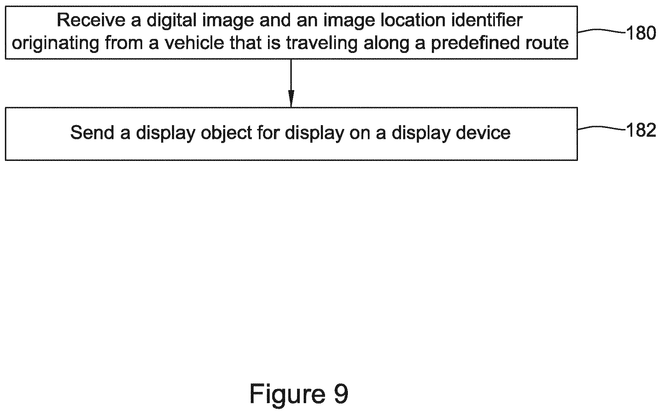

Figure 9 is a flow diagram of an illustrative method that may be carried out via a control device. In some cases, the control device may be a mobile device carried in a vehicle, and in some cases may be built into the vehicle. In some cases, the control device may be part of a building control system, and in some cases, a display for the control device may be mounted to an internal wall of a building. In some cases, the control device may be implemented using a thermostat, a control panel, a smart phone, a tablet, a personal computer, a server and/or any other suitable device, as desired.

Regardless of the particular form of the control device, the illustrative method may be manifested in a non-transitory computer-readable storage medium with an executable program stored thereon. The executable program may instruct the control device to carry out the method by receiving a digital image and an image location identifier that originates from a vehicle that is traveling along a predefined route, as generally indicated at block 180. As seen at block 182, a display object for display on a display may be sent. The display object may, for example, include one or more of a map including one or more roadways, at least part of the predefined route along the one or more roadways, the received digital image and/or an indication of the image location identifier of the received digital image. In some cases, the executable program may instruct the control device to receive two or more digital images each with an image location identifier, each of the two or more received digital images originating from a different vehicle traveling along the predefined route. In some cases, the display object includes two or more of the received digital images, along with an indication of the image location identifier for each of the two or more digital image.

The disclosure should not be considered limited to the particular examples described above. Various modifications, equivalent processes, as well as numerous structures to which the disclosure can be applicable will be readily apparent to those of skill in the art upon review of the instant specification.

## Claims

1. A traffic visualization system comprising:
a display device;
a memory, the memory storing a route between a current position of the traffic visualization system and a route destination;
a network interface; and
a controller operatively coupled to the display device, the memory and the network interface, the controller configured to:
receive a video feed via the network interface, wherein the video feed includes a video feed captured at a vehicle remote from the traffic visualization system that is traveling along the route; and
display on the display device the received video feed.

2. The traffic visualization system of claim 1, wherein the controller is further configured to display on the display device:
a map including one or more roadways;
the current position of the traffic visualization system in relation to the displayed one or more roadways of the map;
the route destination in relation to the displayed one or more roadways of the map; and
the route along the one or more roadways between the current position of the traffic visualization system and the route destination.

3. The traffic visualization system of any one of claims 1 or 2, wherein the video feed comprises a video feed received from a subscriber to a route planning service.

4. The traffic visualization system of any one of claims 1 to 3, wherein the controller displays different video feeds on the display captured by different vehicles along the route.

5. The traffic visualization system of any one of claims 1 to 4, wherein the controller is further configured to receive weather information via the network interface regarding the weather along the route, and optionally, the weather information received via the network interface is based at least in part on video feeds received from one or more vehicles located along the route.

6. The traffic visualization system of any one of claims 1 to 5, wherein the controller is configured to:
receive a plurality of video feeds via the network interface, wherein each of the plurality of video feeds is captured by a different vehicle located at a different location along the route; and
display on the display device two or more of the plurality of received video feeds;
wherein optionally the controller is configured to display the two or more received video feeds concurrently or;
wherein optionally the controller is configured to display a first one of the two or more received video feeds at a first time, and then display a second one of the two or more received video feeds at a second later time.

7. A traffic visualization system comprising:
a display device;
a network interface;
a controller operatively coupled to the display device and the network interface, the controller configured to:
receive an image via the network interface, wherein the image includes an image captured at a vehicle remote from the traffic visualization system that is traveling along a predefined route; and
display on the display device the received image.

8. The traffic visualization system of claim 7, wherein the controller is further configured to display on the display device:
a map including one or more roadways;
a current position of the traffic visualization system in relation to the displayed one or more roadways of the map;
a route destination of the predefined route in relation to the displayed one or more roadways of the map; and
the predefined route along the one or more roadways between the current position of the traffic visualization system and the route destination.

9. The traffic visualization system of any one of claims 7 or 8, wherein the received image comprises an image received from a still camera or a captured frame from a video feed.

10. The traffic visualization system of any one of claims 7 to 9, wherein the controller is configured to:
receive a plurality of images via the network interface, wherein each of the plurality of images is captured by a different vehicle located at a different location along the predefined route; and
display on the display device two or more of the plurality of received images.

11. A non-transitory computer-readable storage medium with an executable program stored thereon, wherein the executable program instructs a control device to perform the following:
receive a digital image and an image location identifier originating from a vehicle that is traveling along a predefined route; and
send a display object for display on a display device, wherein the display object includes:
a map including one or more roadways;
at least part of the predefined route along the one or more roadways;
the received digital image; and
an indication of the image location identifier of the received digital image.

12. The non-transitory computer-readable storage medium of claim 11, wherein the executable program further instructs the control device to perform the following:
receive two or more digital images each with an image location identifier, each of the two or more received digital images originating from a different vehicle traveling along the predefined route; and
wherein the display object includes two or more of the received digital images, along with an indication of the image location identifier for each of the two or more digital image.

13. The non-transitory computer-readable storage medium of any one of claims 11 or 12, wherein a server comprises at least part of the control device.

14. The non-transitory computer-readable storage medium of any one of claims 11 or 12, wherein a mobile device comprises the display device.

15. The non-transitory computer-readable storage medium of any one of claims 11 or 12, wherein a mobile device comprises the control device and the display device.
